(19) Europäisches Patentamt
European Patent Office
Office européen des brevets

(11) **EP 3 673 166 B1**

(12) **FASCICULE DE BREVET EUROPEEN**

(45) Date de publication et mention
de la délivrance du brevet:
**30.06.2021 Bulletin 2021/26**

(51) Int Cl.:
***F02K 1/48*** *(2006.01)*          ***F02K 3/06*** *(2006.01)*

(21) Numéro de dépôt: **18785415.3**

(22) Date de dépôt: **21.08.2018**

(86) Numéro de dépôt international:
**PCT/FR2018/052088**

(87) Numéro de publication internationale:
**WO 2019/038503 (28.02.2019 Gazette 2019/09)**

(54) **TUYÈRE SECONDAIRE MODIFIÉE ACOUSTIQUE**

MODIFIZIERTE AKUSTISCHE SEKUNDÄRDÜSE

MODIFIED ACOUSTIC SECONDARY NOZZLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.08.2017 FR 1757776**

(43) Date de publication de la demande:
**01.07.2020 Bulletin 2020/27**

(73) Titulaire: **Safran Aircraft Engines
75015 Paris (FR)**

(72) Inventeurs:
• **GONZALEZ, Jérémy Paul Francisco
77550 Moissy-Cramayel (FR)**
• **BODARD, Guillaume
77550 Moissy-Cramayel (FR)**
• **JODET, Norman Bruno André
77550 Moissy-Cramayel (FR)**
• **MARDJONO, Jacky Novi
77550 Moissy-Cramayel (FR)**

(74) Mandataire: **Regimbeau
20, rue de Chazelles
75847 Paris Cedex 17 (FR)**

(56) Documents cités:
**FR-A- 1 505 556          US-A- 6 082 635
US-A1- 2010 170 261      US-A1- 2013 239 576**

## Description

DOMAINE TECHNIQUE GENERAL

La présente invention se rapporte au domaine de la réduction du bruit pour une turbomachine à flux mélangés. Elle concerne plus particulièrement l'arrière corps d'un turboréacteur avec mélangeur, où le flux primaire en sortie du moteur et le flux secondaire se mélangent à l'intérieur d'une tuyère dite secondaire, pour former un jet propulsé dans l'air externe.

Le domaine des turbomachines concernées est ainsi relatif aux tuyères LDMF (« *long duct mixed-flow* »), c'est-à-dire une tuyère secondaire s'étendant au-delà du mélange des flux.

L'invention concerne en particulier les solutions apportées aux problématiques d'acoustique dans le cadre de tuyère secondaire dite convergente-divergente.

ETAT DE L'ART

Dans le cadre des tuyères dite convergente-divergente, une source de bruit vient du fait qu'une poche de Mach est présente au niveau du col de la tuyère.

En effet, l'interaction entre la turbulence issue du mélange des deux flux et les zones d'écoulement supersonique dans la tuyère est une source de bruit haute fréquence. Ce phénomène peut apparaître notamment lorsque la tuyère commence à s'amorcer.

Ce phénomène s'observe plus nettement lorsqu'un mélangeur à lobes est installé à la confluence des flux primaire et secondaire. On se réfère aux demandes FR2902469 ou EP1870588 pour les mélangeurs, ainsi qu'au document WO2015/036684 qui propose une solution à l'aide de chevrons situés sur le bord de fuite de la tuyère.

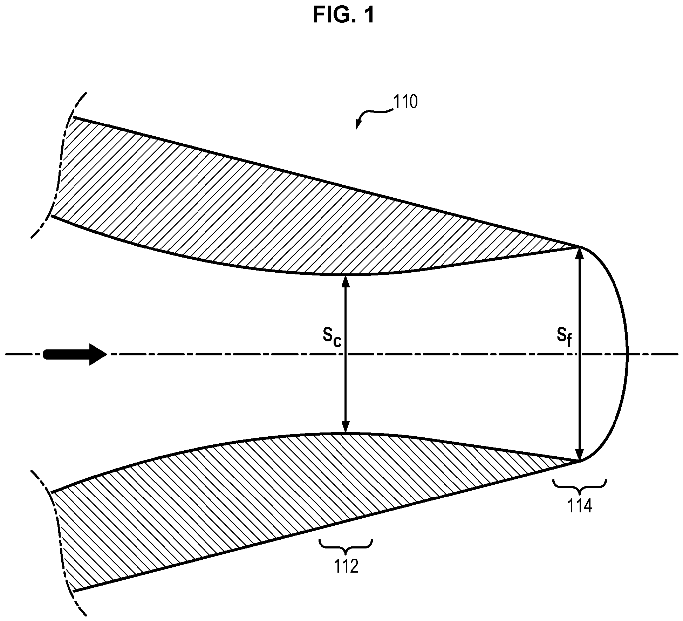

Toutefois, la présente invention se place dans le cadre des tuyères dites convergentes-divergentes. Ces dernières permettent d'améliorer les performances des tuyères à flux mélangés, notamment en augmentant la taille du convergent-divergent (ratio appelé «CVDC» et référencé classiquement A9/A8 - voir **figure 1,** où sont illustrés une tuyère 110, un bord de fuite 114 et un col 112 et les sections respectifs Sf/Sc). Une tuyère convergente-divergente, par définition, présente une section minimale dont le positionnement axial ne coïncide pas avec l'une des extrémités du conduit. L'utilisation d'une tuyère secondaire convergente-divergente a deux avantages : elle permet de modifier sensiblement le coefficient de débit à faible taux de détente et améliorer la performance de la tuyère. Cette augmentation est bénéfique pour la performance du moteur mais elle est pénalisante acoustiquement.

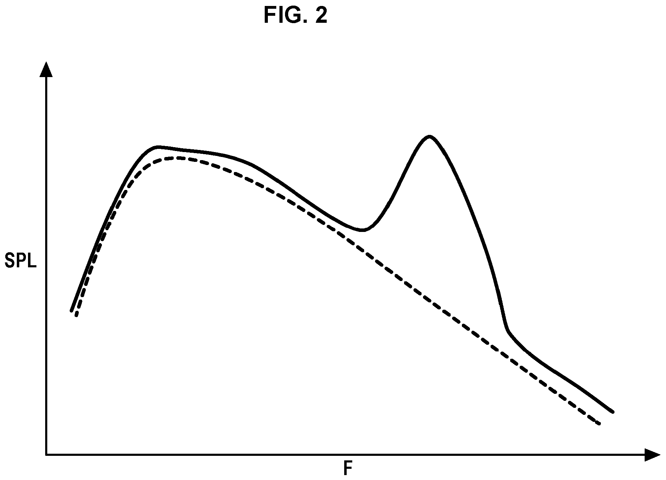

Comme indiqué précédemment, on observe au niveau du col l'apparition d'une poche de Mach (voir **figure 2,** où les deux courbes représentent le bruit avec mélangeur en trait plein et sans mélangeur en trait pointillé - en abscisse la fréquence F et en ordonnée le niveau de pression sonore SPL pour *Sound Pressure Level,* en décibel). Les turbulences issues du mélange des deux flux et la poche de Mach provoquent l'apparition de bruits indésirables.

On connait par ailleurs par le document US 2013/239576 un ensemble pour arrière de turbomachine qui comporte une tuyère convergente-divergente comprenant un mélangeur à lobes.

Les documents FR1505 556 et US 6082635 décrivent quant à eux chacun une tuyère.

PRESENTATION DE L'INVENTION

L'invention vise à réduire les conséquences acoustiques précitées, dans le cadre de tuyère convergente-divergente avec mélangeur.

Pour cela, l'invention propose un ensemble pour arrière de turbomachine selon la revendication 1.

PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :

- La figure 1 illustre le principe général d'une tuyère convergente-divergente,
- La figure 2 illustre des spectres de bruit (en décibel) d'une turbomachine avec et sans mélangeur à lobes,
- La figure 3 illustre en trois dimensions un mode de réalisation de l'invention,
- La figure 4 illustre, en ramenant plusieurs éléments dans un même plan, un mode de réalisation de l'invention,
- Les figures 5 et 6 illustrent une tuyère selon l'invention comparativement à une tuyère de référence.

DESCRIPTION DETAILLEE

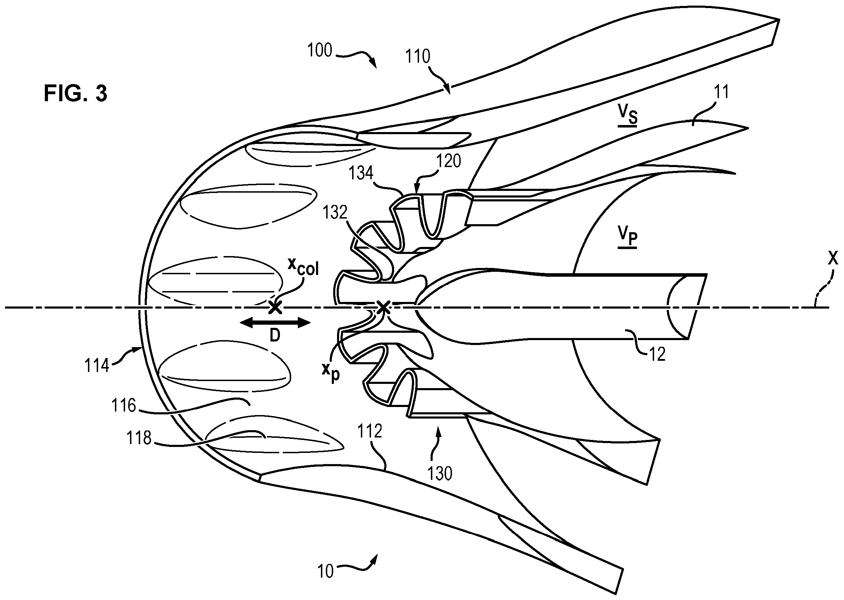

L'invention va à présent être décrite en relation avec les **figures 3 à 6.** L'arrière corps de turbomachine 100 concerné appartient à une turbomachine 10 à double-flux, comprenant une veine primaire Vp et une veine secondaire Vs. On parlera de veine pour le volume au travers duquel circule un flux. Dans la veine primaire Vp circule donc le flux primaire et dans la veine secondaire Vs circule donc le flux secondaire.

La turbomachine 10 est agencée autour d'un axe longitudinal X. On définit l'abscisse comme la position le long de cet axe longitudinal X.

Au sein de la veine primaire Vp, la turbomachine 10 comprend des éléments classiques connus de l'homme du métier, comme un ou plusieurs étages de compression, une chambre de combustion et enfin un ou plusieurs étages de turbines, qui entrainent notamment les compresseurs et aussi un fan, qui permet d'alimenter la veine secondaire Vs et fournit l'essentiel de la poussée.

A l'extrémité avale, la veine primaire Vp est définie par une tuyère primaire 11, qui permet l'éjection du flux primaire. La tuyère primaire 11 peut être formée de plusieurs pièces distinctes.

De la même façon, au sein de la veine secondaire Vs, la turbomachine 10 intègre des éléments classiques connus de l'homme du métier. En particulier, à l'extrémité avale, la veine secondaire est définie par une tuyère 110, dite tuyère secondaire. Dans le cas des turbomachines LDMF, elle s'étend en aval au-delà de la tuyère primaire 11. Par conséquent, la tuyère secondaire 110 éjecte le flux secondaire, mélangé au flux primaire.

Cette tuyère secondaire 110 est convergente-divergente. Comme indiqué en introduction, cela signifie que le rayon (ou le diamètre) de la tuyère diminue puis augmente à nouveau, dans le sens d'écoulement du flux. La conséquence directe est que la section d'écoulement diminue puis augmente à nouveau.

On appelle «col» 112 de la tuyère secondaire la partie de la tuyère 110, à une abscisse $x_{col}$, où cette section est minimale.

Le ratio de convergence-divergence est typiquement compris entre 100% et 105% (ratio de la section au bord de fuite 114 sur la section au col 112 : Sf/Sc).

L'arrière corps de turbomachine 100 peut comporter en outre un corps central 12 limitant l'extension radiale de la veine primaire à l'intérieur de la tuyère 110. Ce corps central 12 n'est pas concerné par l'invention. Il est situé sur l'axe longitudinal X et s'arrête généralement après un bord de fuite 120 de la tuyère.

La tuyère primaire 11 comprend donc un bord de fuite 120, à une abscisse $x_p$ en amont de l'abscisse $x_{col}$. Le corps central 12, s'il est présent, s'étend au-delà longitudinalement du bord de fuite 120, c'est-à-dire en aval de l'abscisse $x_p$.

Comme illustré sur les **figures 3 à 4,** la tuyère primaire 11 se termine par un mélangeur à lobes 130 qui a pour fonction, comme indiquée en introduction, de mélanger les flux primaires et secondaires avant qu'il ne soit complètement éjectés de la tuyère secondaire 110. En référence à la **figure 3,** le mélangeur à lobes 130 est une pièce profilée prolongeant à l'intérieur de la tuyère secondaire 110, les parois définissant à l'intérieur la veine primaire Vp et à l'extérieur la veine secondaire Vs. Les mélangeurs peuvent avoir les lobes symétriques et périodiques, ou bien non symétriques et/ou non périodiques. L'épaisseur du bord de fuite du mélangeur 130, confondu avec le bord de fuite 120 de la tuyère primaire 11, est généralement faible pour éviter un effet de culot entre les deux flux. Le mélangeur à lobes 130 s'arrête généralement à une distance significative de l'extrémité aval de la tuyère 110 pour permettre au mélange de flux de s'homogénéiser. On rappelle que l'invention se place dans les cadres des turbomachines LDMF (« long duct - mixed flow »).

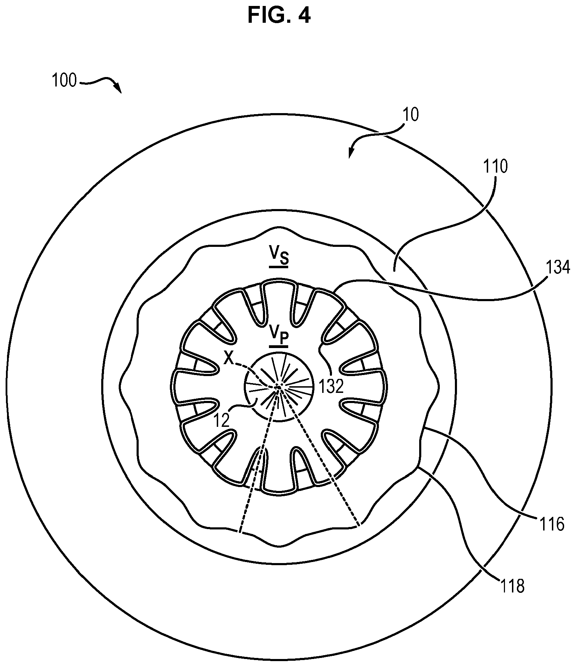

Comme visible sur les **figures 3 et 4,** un exemple de mode de réalisation du mélangeur 130 est constitué avec des lobes symétriques, périodiques en azimut autour de l'axe longitudinal X. Sur cet exemple, la ligne de bord de fuite 120 a une forme tridimensionnelle ondulée en azimut et régulière qui passe périodiquement par un point bas 132 de rayon minimum et un point haut 134 de rayon maximum. La forme du mélangeur est préférentiellement obtenue en rejoignant cette ligne de bord de fuite 120 par des surfaces régulières lisses, d'un côté à la section circulaire de la paroi extérieure de la tuyère primaire 11, de l'autre côté à la section circulaire de la paroi intérieure de veine secondaire Vs. Des moyens connus permettent à l'homme du métier d'obtenir ces surfaces lisses en définissant des lois régulières de variation de rayon pour joindre les sections d'entrée au bord de fuite 120 du mélangeur à lobes 130.

Sur l'exemple présenté, les évolutions du bord de fuite 120 du mélangeur 130 sont périodiques. De cette manière, la surface moyenne entre la paroi radialement externe et la paroi radialement interne du mélangeur 130 fait des ondulations périodiques en azimut autour de l'axe longitudinal X qui créent, du côté du flux primaire sous les points hauts 134 du bord de fuite 120, des lobes divergents (dits lobes chauds et référencés 134 par simplification), et créent, du côté du flux secondaire au-dessus des points bas 132 du bord de fuite 120, des lobes convergents (dit lobes froids et référencés 132 par simplification).

Sur l'exemple présenté, l'abscisse $x_p$ sur l'axe longitudinal X qui détermine l'extension maximale du mélangeur à lobes 6 en aval correspond aux points haut des lobes chauds **(figure 3).** Par l'abscisse $x_p$ passe un plan d'éjection, c'est-à-dire un plan à partir duquel le flux d'air est éjecté des lobes chauds. Cet exemple de réalisation de mélangeur, comporte dix-huit lobes chauds symétriques autour du plan axial passant par leur milieu et répartis de manière périodique.

Dans un autre mode de réalisation de l'invention, on peut envisager de définir un mélangeur à lobes 130 en modifiant son extension axiale, le taux de pénétration des lobes (déterminé essentiellement par les rayons des points hauts 134 et bas 132 du bord de fuite 120), la forme de ce bord de fuite 120, ainsi que le nombre de lobes. Les lobes peuvent également ne pas présenter de plans axiaux de symétrie. De même, bien que la répartition des lobes soit essentiellement périodique, cette périodicité peut être localement affectée en modifiant la forme de certains lobes, par exemple pour adapter le mélangeur 130 à un passage de pylône.

Le mélangeur à lobe 130 favorise le mélange des flux primaire Vp et secondaire Vs dans la veine à l'intérieur de la tuyère secondaire 110, notamment en provoquant des cisaillements et des tourbillons à l'interface entre les flux.

A présent que le cadre général a été décrit, les moyens de l'invention vont être explicités en relation avec les **figures 3 à 6.**

La tuyère secondaire 110 comprend, le long de sa circonférence interne, au niveau du col 112, une succession périodique de lobes radialement vers l'extérieur 118 radialement vers l'intérieur 116. En d'autres termes, une succession périodique de lobes 116, 118 est prévue sur la circonférence interne de la tuyère secondaire 110. La succession comprend une alternance de lobes convexes 116 et concaves 118. Cela permet d'augmenter et de diminuer localement le rayon du col 112 de la tuyère secondaire 110 notamment, pour permettre une meilleure répartition de la chaleur sortant des lobes chauds. En particulier, cela permet de garder le flux d'air qui traverse la ou les poches de Mach situées au niveau du col 112, à proximité de la paroi interne de la tuyère 110. Il s'agit donc d'un système passif.

Le rayon maximal de la tuyère secondaire 110 au niveau du col 112 demeure toutefois inférieur au rayon de la tuyère secondaire 110 au niveau du bord de fuite.

Les lobes 116, 118 sont préférablement situés sur toute la circonférence interne de la tuyère 110. Toutefois, il est possible que, pour des raisons de conception (asymétrie de révolution, passage de bras), certaines portions de la circonférence puissent être démunis de lobes 116, 118.

Les termes « convexe » et « concave » signifient « globalement convexe » et « globalement concave », c'est un dire un lobe (qui est une portion arrondie) dans lequel la matière s'étend radialement vers l'intérieur et un lobe dans lequel la matière est en retrait radialement vers l'extérieur. Il peut localement y avoir une convexité dans la concavité. En d'autres termes et d'une façon plus générale, la tuyère présente au col une section non circulaire, présentant une alternance de lobes de sorte que le rayon de la section varie de façon régulière.

Dans un mode de réalisation particulier, les définitions de « convexe » et « concave » peuvent être strictes, en ce sens que les lobes convexes sont définis par une courbe convexe (sans inflexion donc) et que les lobes concaves sont définis par une courbe concave (sans inflexion donc). On parlera alors de « strictement convexe » et « strictement concave ».

Dans un mode de réalisation, il est possible d'avoir des lobes strictement concaves et des lobes convexes, selon les définitions explicitées précédemment.

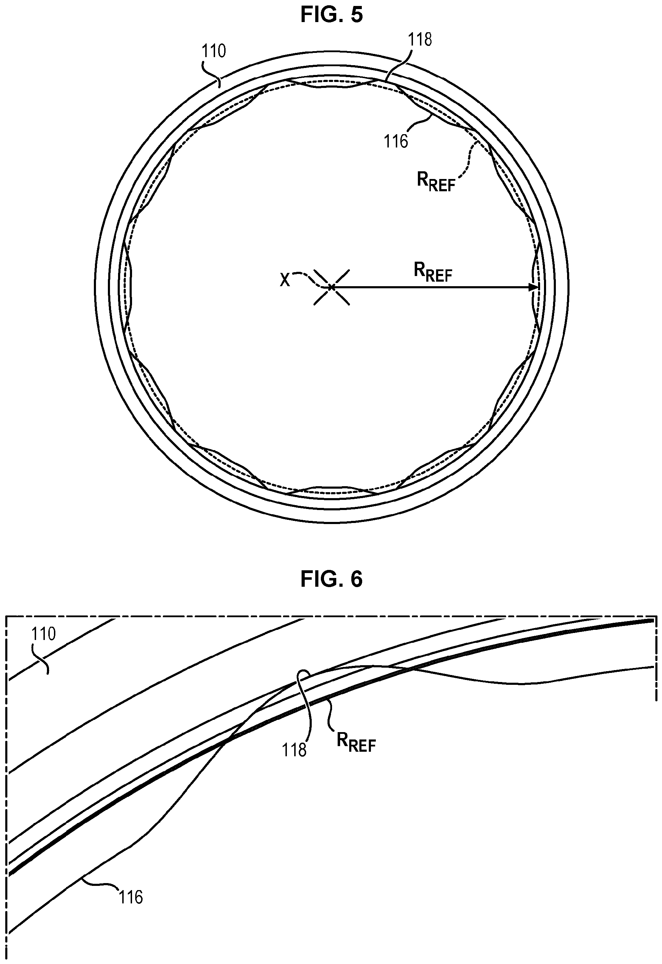

Comparativement à une tuyère classique, dont les sections orthogonales à l'axe longitudinal X sont circulaires, l'aire de la tuyère au niveau du col 112 reste préférablement inchangée. Cela implique que, à partir d'une tuyère de référence axisymétrique, de rayon $R_{ref}$ à l'abscisse $X_{col}$ correspondant au col 112, les lobes concaves 118 s'étendent radialement à l'extérieur de la section circulaire de référence et les lobes convexes 116 s'étendent radialement à l'intérieur de la section circulaire de référence (voir **figures 5 et 6** - sur cette dernière, $R_{ref}$ désigne la circonférence de la section circulaire de référence).

Les lobes 116, 118 de la tuyère secondaire 110 sont positionnés circonférentiellement en fonction des lobes froids 132 et chauds 134 du mélangeur 130. En particulier, les lobes concaves 118 sont positionnés radialement en regard des lobes chauds 134, au décalage longitudinal près. Préférablement, pour des raisons évidentes de symétrie, les sommets des lobes d'un couple lobes concave/chaud ou convexe/froid sont radialement alignés (c'est-à-dire que dans une section orthogonale, l'axe longitudinal et les deux sommets sont alignés).

Préférablement, l'enchainement entre un lobe concave 118 et un lobe convexe 116 se fait dans l'alignement radial de l'enchainement entre un lobe chaud 134 et un lobe froid 132.

Pour des raisons d'efficacité, dans un mode de réalisation, on dénombre autant de lobes concaves 118 que de lobes chauds 134. Dans un mode de réalisation complémentaire ou alternatif, on dénombre autant de lobes convexes 118 que de lobes froids 132. Il se peut que les nombres ne correspondent pas dans certains cas précis où des contraintes imposent d'enlever un lobe concave ou convexe (actionneur, etc.).

Les lobes 116, 118 s'étendent aussi longitudinalement dans la tuyère secondaire 110 selon une certaine distance D à partir du col, de façon à générer des formes aérodynamiques, que ce soit en amont et/ou en aval du col 112.

Pour cela, on privilégie des amplitudes des lobes convexes 116 et concaves 118 entre plusieurs sections orthogonales à l'axe longitudinal X successives qui diminuent progressivement pour devenir nulles, en amont et en aval du col 112. Cela peut signifier notamment que la section de la tuyère redevient d'une façon générale circulaire. La diminution de l'amplitude des lobes est à la fois en absolu (les lobes en dehors du col 112 ont une amplitude inférieure à celle au niveau col 112) et en relatif (l'amplitude du lobe par rapport au diamètre est plus importante au niveau du col qu'ailleurs).

Préférablement, les lobes 116, 118 sont longitudinalement centrés sur le col 112 et s'étendent donc longitudinalement en amont et en aval.

Dans un mode de réalisation, les lobes 116, 118 s'étendent jusqu'au bord de fuite 114, avec une amplitude qui décroit progressivement de sorte que la section du bord de fuite 114 soit circulaire.

La distance D peut dépendre de différents paramètres, comme notamment la distance entre le bord de fuite 114 et le col 112. Toutefois, la distance entre le col 112 et une des extrémités du lobe 116, 118 est préférablement inférieure à 1 fois le diamètre de la tuyère secondaire 110 au col 112.

Dans un mode de réalisation particulier adapté à un mélangeur 130 périodique, les lobes définissent une sinusoïde vérifiant l'équation suivante :

$$R(x,\theta) = R_{ref}(x) + L(x) . \cos(N.\theta)$$

où R est le rayon de la tuyère en fonction de la position circonférentielle et de l'abscisse le long de l'axe longitudinal de la tuyère, $x_{col}$ est l'abscisse du col, $R_{ref}$ est le rayon de la section circulaire de référence, L est une fonction d'amplitude dépendant de l'abscisse x, et N est le nombre de périodes, c'est-à-dire le nombre de lobes convexes 116 ou concaves 118 désirées.

Comme on souhaite que l'aire de la section de la tuyère 110 à l'abscisse $X_{col}$ soit identique à celle de la tuyère de référence, les lobes vérifient aussi l'équation suivante :

$$\pi R^2{}_{ref}(x_{col}) = \pi \int_0^{2\pi} R^2(x_{col}, \theta)\, d\theta$$

La fonction L détermine l'évolution des lobes selon l'abscisse. Dans un mode de réalisation, on utilise une fonctionne gaussienne.

Dans ce mode de réalisation, on a des donc des lobes strictement convexes et strictement concaves, centrés longitudinalement autour du col 112. La forme des lobes de la tuyère 110 peut déroger localement à la formule donnée pour permettre le passage d'un pylône ou d'un arbre structurel. Ainsi, la formule peut être appliquée pour des lobes sur une portion de la circonférence interne. Cette portion s'étend alors au moins sur 50%, voire 75% de la circonférence interne totale. En l'absence de structure particulière qui viennent perturber l'application de la formule, l'intégralité de la circonférence peut être définie de la sorte.

Les lobes 116, 118 sont préférablement formés directement dans le matériau de la tuyère, soit lors de la fonderie, soit par déformation postérieure. Il peut être envisagé de créer les lobes convexes 116 par ajout de matière postérieurement à la fabrication de la tuyère secondaire 110.

Cette tuyère modifiée présente un impact masse limité, voire nul. Etant passif, le risque de panne est lui aussi limité, voire nul, et il ne consomme aucune ressource additionnelle. De plus, il ne réduit pas la surface de traitement pour les traitements acoustiques connus (disposés dans l'épaisseur de la tuyère secondaire). Enfin, cette tuyère modifiée n'implique quasiment pas de contrainte sur l'architecture des tuyères convergentes-divergentes classiques.

Une augmentation de la température localement de 50°K permet par exemple de faire baisser le Mach entre 0,90 et 0,95, par rapport à un Mach de 1 pour une température de 320°K.

La tuyère déformée 110 permet de gagner jusqu'à 1 EPNdB en cumulé.

**Revendications**

1. Ensemble pour arrière de turbomachine (10) double-flux ayant un axe longitudinal (X), comprenant :

   - une tuyère primaire (11), comprenant un bord de fuite (120) et définissant une portion de veine primaire (Vp),

   - une tuyère secondaire (110) définissant une portion de veine secondaire (Vs), ladite tuyère étant configurée pour éjecter un mélange des flux issus d'une veine secondaire (Vs) et d'une veine primaire (Vp) de la turbomachine lorsque l'ensemble est installé sur la turbomachine (10), la tuyère secondaire étant de forme convergente-divergente avec un col (112) correspondant à une section minimale de la tuyère (110),
   - un mélangeur à lobes (130), en extrémité aval de la tuyère primaire (11) et présentant une alternance de lobes chauds (134) s'étendant à l'intérieur de la veine secondaire (Vs) et de lobes froids (132) s'étendant à l'intérieur de la veine primaire (Vp),

   **caractérisé en ce que** :

   - la tuyère secondaire (110) comprend, au niveau du col (112), une succession périodique de lobes convexes et concaves (116, 118) situés le long de la circonférence interne de la tuyère secondaire (110), et
   - les lobes concaves (118), c'est-à-dire radialement vers l'extérieur, respectivement convexes (116), c'est à dire radialement vers l'intérieur, de la tuyère (110) sont, au décalage longitudinal près, radialement en regard des lobes chauds (134), respectivement froids, du mélangeur (130).

2. Ensemble pour arrière de turbomachine (10) selon la revendication 1, dans lequel chaque lobe (116, 118) s'étend axialement sur une partie de la tuyère secondaire (110) selon une certaine distance (D) en amont et/ou en aval du col (112), préférablement en aval jusqu'au bord de fuite (114) de la tuyère (110).

3. Ensemble pour arrière de turbomachine (10) selon la revendication 2, dans lequel la distance (D) est inférieure à une fois le diamètre moyen de la tuyère (110) au niveau du col (112).

4. Ensemble pour arrière de turbomachine (10) selon les revendications 2 ou 3, dans laquelle, dans des sections orthogonales à l'axe longitudinal (X), l'amplitude des lobes (116 118) entre sections successives le long de la direction amont et/ou aval du col (112) diminue progressivement pour être nulle.

5. Ensemble pour arrière de turbomachine (10) selon l'une quelconque des revendications précédentes, dans laquelle la succession périodique de lobes est définie, au moins sur une portion de la circonférence interne, préférablement plus de 75% de la circonférence interne, par l'équation suivante :

$$R(x,\theta) = R_{ref}(x) + L(x).\cos(N.\theta)$$

et

$$\pi R^2_{ref}(x_{col}) = \pi \int_0^{2\pi} R^2(x_{col},\theta)\,d\theta$$

où R est le rayon de la tuyère secondaire en fonction de la position circonférentielle et de l'abscisse le long de l'axe longitudinal de la tuyère, $X_{col}$ est l'abscisse du col, $R_{ref}$ est le rayon d'un section circulaire de référence, L est une fonction d'amplitude dépendant de l'abscisse, N est le nombre de périodes.

6. Ensemble pour arrière de turbomachine (10) selon l'une quelconque des revendications précédentes, dans lequel les lobes sont formés directement dans le matériau de la tuyère.

7. Ensemble pour arrière de turbomachine (10) selon l'une quelconque des revendications précédentes, dans lequel le ratio entre la section au bord de fuite (114) de la tuyère secondaire (110) et la section au col (112) de la tuyère secondaire (110) est compris entre 1 et 1,05.

8. Ensemble pour arrière de turbomachine (10) selon l'une quelconque des revendications précédentes, dans lequel la section du bord de fuite (114) de la tuyère secondaire est circulaire.

9. Ensemble selon la revendication 8, dans lequel il y a autant de lobes concaves (118) que de lobes chauds (134) et autant de lobes convexes (116) que de lobes froids (132).

10. Turbomachine double-flux (10) comprenant un ensemble pour turbomachine (10) double-flux selon l'une quelconque des revendications 1 à 9.

**Patentansprüche**

1. Baugruppe für eine Rückseite einer Doppelstrom-Turbomaschine (10), die eine Längsachse (X) aufweist, Folgendes umfassend:

   - eine Primärdüse (11), die eine Hinterkante (120) umfasst, und einen Primärstromabschnitt (Vp) definiert,
   - eine Sekundärdüse (110), die einen Sekundärstromabschnitt (Vs) definiert, wobei die Düse konfiguriert ist, um eine Mischung der Ströme auszustoßen, die aus einem Sekundärstrom (Vs) und einem Primärstrom (Vp) der Turbomaschine stammen, wenn die Baugruppe in der Turbomaschine (10) installiert ist, wobei die Sekundärdüse in konvergierender-divergierender Form mit einem Kragen (112) ist, der einer Mindestsektion der Düse (110) entspricht,
   - einen Mischer mit Lappen (130) am stromabwärtigen Ende der Primärdüse (11) und der eine Abwechslung von heißen Lappen (134), die sich im Inneren des Sekundärstroms (Vs) erstrecken, und von kalten Lappen (132), die sich im Inneren des Primärstroms (Vp) erstrecken, aufweist,

**dadurch gekennzeichnet, dass**:

   - eine Sekundärdüse (110) im Bereich des Kragens (112) eine periodische Aufeinanderfolge von konvexen und konkaven Lappen (116, 118) umfasst, die sich entlang des Innenumfangs der Sekundärdüse (110) befinden, und
   - die konkaven, also radial nach außen verlaufenden Lappen (118), und konvexen, also radial nach innen verlaufenden Lappen (116) der Düse (110) abgesehen vom Längsversatz radial gegenüber den heißen (134), beziehungsweise den kalten Lappen des Mischers (130) sind.

2. Baugruppe für eine Rückseite einer Turbomaschine (10) nach Anspruch 1, wobei sich jeder Lappen (116, 118) axial über einen Teil der Sekundärdüse (110) in einem bestimmten Abstand (D) stromaufwärts und/oder stromabwärts des Kragens (112), vorzugsweise stromabwärts bis zur Hinterkante (114) der Düse (110) erstreckt.

3. Baugruppe für eine Rückseite einer Turbomaschine (10) nach Anspruch 2, wobei der Abstand (D) kleiner als einmal dem mittleren Durchmesser der Düse (110) im Bereich des Kragens (112) ist.

4. Baugruppe für eine Rückseite einer Turbomaschine (10) nach den Ansprüchen 2 oder 3, wobei die Amplitude der Lappen (116, 118) zwischen aufeinanderfolgenden Sektionen entlang der Richtung stromaufwärts und/oder stromabwärts des Kragens (112) in den Sektionen orthogonal zur Längsachse (X) progressiv abnimmt, um Null zu sein.

5. Baugruppe für eine Rückseite einer Turbomaschine (10) nach einem der vorstehenden Ansprüche, wobei die periodische Aufeinanderfolge von Lappen mindestens auf einem Abschnitt des Innenumfangs, vorzugsweise mehr als 75 % des Innenumfangs durch die folgende Gleichung definiert wird:

$$R(x,\theta) = R_{ref}(x) + L(x).\cos(N.\theta)$$

und

$$\pi R^2_{ref}(x_{col}) = \pi \int_0^{2\pi} R^2(x_{col}, \theta)\, d\theta$$

wobei R der Radius der Sekundärdüse in Abhängigkeit von der Umfangsposition und der Abszisse entlang der Längsachse der Düse ist, $x_{Kragen}$ die Abszisse des Kragens ist, $R_{Ref}$ der Radius einer kreisförmigen Referenzsektion ist, L eine von der Abszisse abhängige Amplitudenfunktion ist, N die Anzahl an Perioden ist.

6. Baugruppe für eine Rückseite einer Turbomaschine (10) nach einem der vorstehenden Ansprüche, wobei die Lappen direkt aus dem Material der Düse gebildet sind.

7. Baugruppe für eine Rückseite einer Turbomaschine (10) nach einem der vorstehenden Ansprüche, wobei das Verhältnis zwischen der Sektion an der Hinterkante (114) der Sekundärdüse (110) und der Sektion am Kragen (112) der Sekundärdüse (110) zwischen 1 und 1,05 enthalten ist.

8. Baugruppe für eine Rückseite einer Turbomaschine (10) nach einem der vorstehenden Ansprüche, wobei die Sektion der Hinterkante (114) der Sekundärdüse kreisförmig ist.

9. Baugruppe nach Anspruch 8, wobei ebenso viele konkave Lappen (118) wie heiße Lappen (134) und ebenso viele konvexe Lappen (116) wie kalte Lappen (132) vorhanden sind.

10. Doppelstrom-Turbomaschine (10), eine Baugruppe für eine Doppelstrom-Turbomaschine (10) nach einem der Ansprüche 1 bis 9 umfassend.

**Claims**

1. An assembly for the rear of a double-flow turbomachine (10) with a longitudinal axis (X), comprising:

   - a primary nozzle (11), comprising a trailing edge (120) and defining a primary flowpath (Vp) portion,
   - a secondary nozzle (110) defining a secondary flowpath (Vs) portion, said nozzle being configured to eject a mixture of the flows derived from a secondary flowpath (Vs) and a primary flowpath (Vp) of the turbomachine (10) when the assembly is installed on the turbomachine (10), the secondary nozzle being of convergent-divergent shape with a throat (112) corresponding to a minimum section of the nozzle (110),
   - a lobed mixer (130), at the downstream end of the primary nozzle (11) and having an alternation of hot lobes (134) extending inside the secondary flowpath (Vs) and cold lobes (132) extending inside the primary flowpath (Vp),

   **characterised in that**:

   - the secondary nozzle (110) comprises, at the throat (112), a periodic succession of convex and concave lobes (116, 118) located along the inner circumference of the secondary nozzle (110), and
   - the concave (118), that is to say radially outwardly, respectively convex (116), that is to say radially inwardly, lobes of the nozzle (110) are, to within the longitudinal offset, radially facing the hot (134), respectively cold (132), lobes of the mixer (130).

2. The assembly for the rear of a turbomachine (10) according to claim 1, wherein each lobe (116, 118) extends axially over part of the secondary nozzle (110) by a certain distance (D) upstream and/or downstream of the throat (112), preferably downstream to the trailing edge (114) of the nozzle (110).

3. The assembly for the rear of a turbomachine (10) according to claim 2, wherein the distance (D) is smaller than once the average diameter of the nozzle (110) at the throat (112).

4. The assembly for the rear of a turbomachine (10) according to claims 2 or 3, wherein, in sections orthogonal to the longitudinal axis (X), the amplitude of the lobes (116 118) between successive sections along the upstream and/or downstream direction of the throat (112) gradually decreases until reaching zero.

5. The assembly for the rear of a turbomachine (10) according to any one of the preceding claims, wherein the periodic succession of lobes is defined, at least on a portion of the inner circumference, preferably more than 75% of the inner circumference, by the following equation:

$$R(x, \theta) = R_{ref}(x) + L(x)\cdot\cos(N\cdot\theta)$$

and

$$\pi R^2_{ref}(x_{throat}) = \pi \int_0^{2\pi} R^2(x_{throat}, \theta)\, d\theta$$

where R is the radius of the secondary nozzle as a function of the circumferential position and of the abscissa along the longitudinal axis of the nozzle, $x_{throat}$

is the abscissa of the throat, $R_{ref}$ is the radius of a circular reference section, L is an amplitude function depending on the abscissa, N is the number of periods.

6. The assembly for the rear of a turbomachine (10) according to any one of the preceding claims, wherein the lobes are formed directly in the material of the nozzle.

7. The assembly for the rear of a turbomachine (10) according to any one of the preceding claims, wherein the ratio between the section at the trailing edge (114) of the secondary nozzle (110) and the section at the throat (112) of the secondary nozzle (110) is comprised between 1 and 1.05.

8. The assembly for the rear of a turbomachine (10) according to any one of the preceding claims, wherein the section of the trailing edge (114) of the secondary nozzle is circular.

9. The assembly according to claim 8, wherein there are as many concave lobes (118) as there are hot lobes (134) and as many convex lobes (116) as there are cold lobes (132).

10. A double-flow turbomachine (10) comprising an assembly for a double-flow turbomachine (10) according to any one of claims 1 to 9.

# FIG. 1

FIG. 2

EP 3 673 166 B1

FIG. 3

EP 3 673 166 B1

# FIG. 4

## FIG. 5

## FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2902469
- EP 1870588 A
- WO 2015036684 A
- US 2013239576 A
- FR 1505556
- US 6082635 A